(19) Europäisches Patentamt / European Patent Office / Office européen des brevets

(11) **EP 4 325 625 B1**

(12) **EUROPEAN PATENT SPECIFICATION**

(45) Date of publication and mention
of the grant of the patent:
**24.09.2025  Bulletin 2025/39**

(21) Application number: **23771143.7**

(22) Date of filing: **17.03.2023**

(51) International Patent Classification (IPC):
*H01M 10/42* *(2006.01)*      *H01M 50/572* *(2021.01)*
*B05C 11/10* *(2006.01)*      *B05C 5/02* *(2006.01)*

(52) Cooperative Patent Classification (CPC):
**B05C 5/0254; B05C 11/1002; B05C 5/0258**

(86) International application number:
**PCT/KR2023/003606**

(87) International publication number:
**WO 2023/177265 (21.09.2023 Gazette 2023/38)**

(54) **INSULATING LIQUID SUPPLY DEVICE**

ISOLIERENDE FLÜSSIGKEITSVERSORGUNGSVORRICHTUNG

APPAREIL D'ALIMENTATION EN LIQUIDE ISOLANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **17.03.2022   KR 20220033402**

(43) Date of publication of application:
**21.02.2024   Bulletin 2024/08**

(73) Proprietor: **LG Energy Solution, Ltd.
Seoul 07335 (KR)**

(72) Inventors:
• **PARK, Joon Sun
  Daejeon 34122 (KR)**
• **KIM, Guk Tae
  Daejeon 34122 (KR)**

• **KIM, Man Hyeong
  Daejeon 34122 (KR)**
• **CHOI, Min Hyuck
  Daejeon 34122 (KR)**

(74) Representative: **Plasseraud IP
104 Rue de Richelieu
CS92104
75080 Paris Cedex 02 (FR)**

(56) References cited:
**WO-A1-2021/246336      CN-A- 112 892 999
JP-A- 2003 059 525      JP-A- 2017 050 213
JP-A- 2022 041 501      JP-A- S6 295 171
KR-A- 20170 126 463      KR-B1- 102 035 822
KR-B1- 102 035 826**

**Description**

[Technical Fields]

The present invention relates to an insulating liquid supplying device, suitable for multi-row simultaneous coating of an insulating liquid.

This application claims the benefit of priority based on Korean Patent Application No. 10-2022-0033402 filed on March 17, 2022.

[Background Technology of the Invention]

Lithium secondary batteries and the like utilize electrodes having an active material and an insulating layer formed on the surface of a current collector. These electrodes are manufactured by applying both an electrode slurry containing an active material and an insulating liquid containing an insulating material to the surface of the collector using a coating device such as a slot die and drying it so that some of the edges of the electrode composite layer overlap.

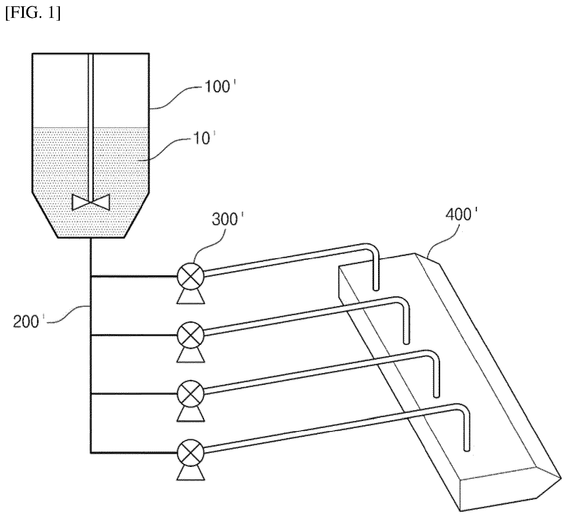

The insulating liquid is applied over both edges in the width direction of the electrode slurry applied to the current collector, and when the electrode slurry is applied to the electrodes in multiple rows, the insulating liquid is applied correspondingly in multiple rows. For multi-row simultaneous coating, as shown in FIG. 1, a plurality of transfer pipes is connected in parallel to the slot die from the insulating liquid tank storing the insulating liquid, and a transfer pump is provided for each transfer pipe for transferring the insulating liquid.

According to the insulating liquid 10' supply system shown in FIG. 1, even if all the transfer pumps 300' transports a certain flow rate, differences in the flow rate of the insulating liquid 10' delivered to the slot die 400' from each of the transfer pipes 200' may occur due to differences in the distance from the insulating liquid tank 100' to the transfer pumps 300', the length of the transfer pipes 200', and the distance from the transfer pumps 300' to the slot die 400', etc. For example, the flow rate of the insulating liquid 10' from the transfer pipe 200' with the greatest pressure loss may be significantly reduced.

Furthermore, in the real world, it is difficult for all transfer pumps to transfer the same flow rate of insulating liquid, which can further increase the unevenness of the insulating liquid that is finally discharged from the slot die. Setting the discharge flow rate of each transfer pump individually in consideration of these flow unevenness issues is also not easy in terms of production management.

[Related Art]

Korean Patent Application No. 10-2035822

Insulating liquid supplying devices for supplying insulating liquid to a slot die for a multi-row simultaneous coating according to the prior art are known from CN 112892999 A, JP 2017050213 A and JP 2022041501 A.

[Description of the Invention]

[Technical Problem] The present invention aims to solve the problem of uneven flow rate of insulating liquid in an insulating liquid supplying device for supplying insulating liquid to a slot die for multi-row simultaneous coating.

Other objects and advantages of the present invention can be understood from the following description, and will become more apparent from the exemplary embodiments of the present invention. It will also be readily apparent that the objects and advantages of the present invention can be implemented by the means and combinations thereof set forth in the claims of the patent. The invention is as defined by the appended claims.

[Technical Solution]

To solve the above-mentioned problems,

According to the present invention, an insulating liquid supplying device for supplying insulating liquid to a slot die for a multi-row simultaneous coating includes: an insulating liquid tank for receiving insulating liquid; a cylindrical insulating liquid header receiving insulating liquid transferred from the insulating liquid tank, and conveying the received insulating liquid to a slot die; a transfer pipe connected between the insulating liquid tank and the insulating liquid header so that insulating liquid can be transferred; a plurality of supply pipes connected between the insulating liquid header and the slot die; and a transfer pump provided in the transfer pipe to provide pressure to transfer insulating liquid from the insulating liquid tank to the slot die, wherein the supply pipes are connected to the upper part of the insulating liquid header.

Specifically, the insulating liquid header may extend along the width direction of the slot die.

In addition, the insulating liquid header may be formed to be extended so that it can be horizontal to the slot die.

According to the invention, the supply pipe is protruded from the upper part of the insulating liquid header and connected to the slot die.

More specifically, the plurality of supply pipes may be disposed along the direction in which the insulating liquid header is extended to connect the insulating liquid header and the slot die.

In addition, the length and inside diameter of each of the supply pipes may be all the same.

In addition, the pressure losses in each of the supply pipes may be the same.

Meanwhile, the pressure loss of the insulating liquid header may be smaller than the pressure loss of the supply pipe.

In addition, the pressure losses of the insulating liquid header and the supply pipe may meet the conditions of Equation 1 below.

[Equation 1]

$$(\triangle Ph/n) < \triangle Ps * 5\%$$

(In Equation 1, n is the number of transfer pipes connected to the insulating liquid header, $\triangle Ph$ is the pressure loss inside the insulating liquid header, and $\triangle Ps$ is the pressure loss of a single supply pipe.)

According to the invention, the transfer pipe is connected to the lower part of the insulating liquid header.

Meanwhile, according to another exemplary embodiment, the transfer pipe may include: a main transfer pipe connected to the insulating liquid tank; and an auxiliary transfer pipe branching from the main transfer pipe and connected to the insulating liquid header.

Specifically, at least two or more auxiliary transfer pipes branch off in parallel from the main transfer pipe, and the branched auxiliary transfer pipes are connected to the insulating liquid header, respectively.

More specifically, the transfer pumps may be provided in each of the auxiliary transfer pipes.

According to the present invention, a slot die including a plurality of outlets for discharging insulating liquid at one end, connected to an insulating liquid header receiving the insulating liquid, and receiving insulating liquid from each supply pipe by being connected to the insulating liquid header by a plurality of supply pipes is provided.

[Advantageous Effects]

According to the present invention, the flow rate of the insulating liquid transferred to the slot die through the plurality of pipes can be made to vary little. Furthermore, the discharge pressure of each insulating liquid discharged from the slot die through the plurality of nozzles can be maintained uniformly.

[Brief Description of the Drawings]

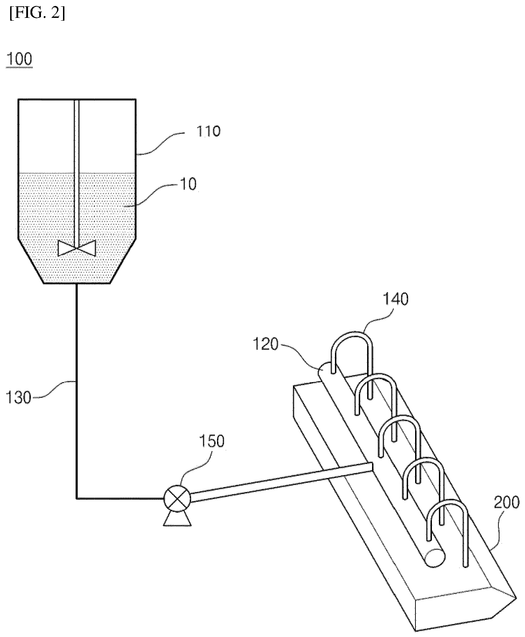

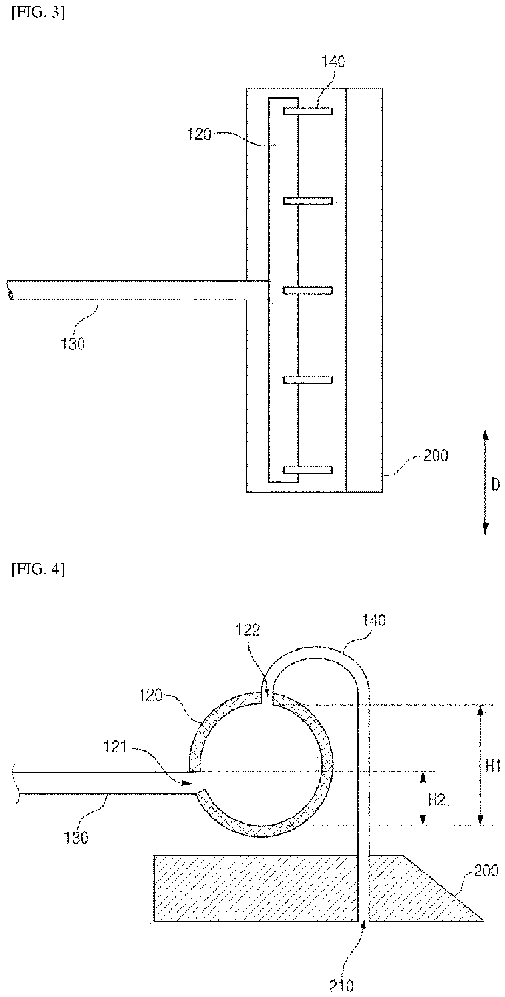

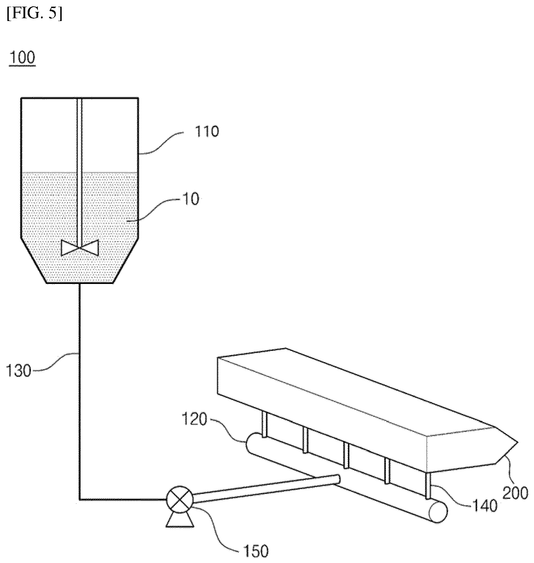

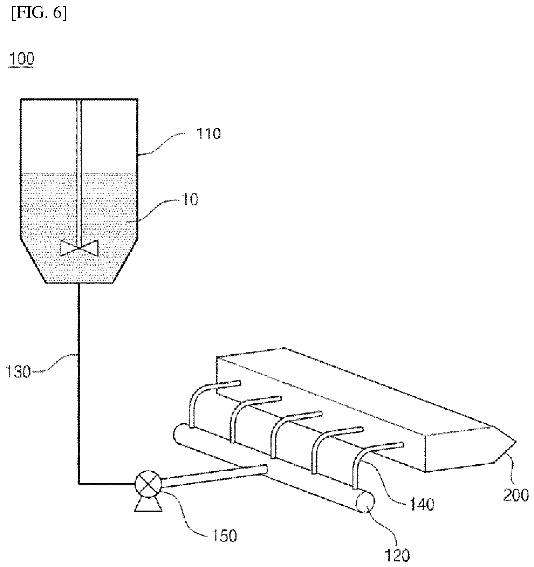

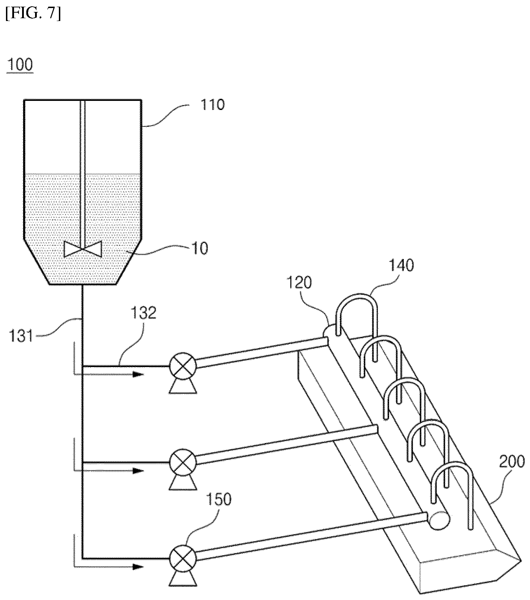

FIG. 1 is a conventional insulating coating liquid supplying device for multi-row simultaneous coating. FIG. 2 is an insulating liquid supplying device according to a first embodiment of the present invention. FIG. 3 is a plan view of an insulating liquid header of an insulating liquid supplying device according to the first embodiment of the present invention. FIG. 4 is a cross-sectional view of the insulating liquid header of FIG. 3. FIG. 5 is an insulating liquid supplying device according to a second embodiment, not according to the present invention. FIG. 6 is an insulating liquid supplying device according to a third embodiment, not according to the present invention. FIG. 7 is an insulating liquid supplying device according to a fourth embodiment of the present invention.

[Best Mode for Carrying out the Invention]

Hereinafter, the present invention is described in detail with reference to the accompanying drawings and various embodiments. The exemplary embodiments described herein are shown by way of illustration to aid in understanding the invention, and the accompanying drawings are not to scale and may show exaggerated dimensions of some components.

The insulating liquid supplying device 100 according to the present invention supplies insulating liquid 10 to a slot die 200 for multi-row simultaneous coating that can simultaneously provide insulating liquid to both sides of an electrode active material. In other words, the present invention relates to a device for supplying insulating liquid 10 to a slot die 200 that coats by simultaneously discharging insulating liquid 10 in a plurality of rows.

Specifically, the insulating liquid supplying device 100 of the present invention includes an insulating liquid tank 110, an insulating liquid header 120, a transfer pipe 130, a supply pipe 140, and a transfer pump 150, and is characterized in that it uniformly delivers the insulating liquid 10 transferred from the insulating liquid tank 110 by the insulating liquid header 120 to the slot die 200 through the supply pipe 140.

[Mode for Carrying out the Invention]

Hereinafter, an insulating liquid supplying device 100 will be described with reference to FIGS. 2 through 7.

(First Embodiment)

FIG. 2 illustrates an insulating liquid supplying device 100 according to a first embodiment of the present invention, FIG. 3 is a plan view of an insulating liquid header 120 of the insulating liquid supplying device 100 of FIG. 2, and FIG. 4 is a cross-sectional view of the insulating liquid header 120 of FIG. 3.

As shown in FIG. 2, the insulating liquid supplying device 100 according to the first embodiment of the present invention includes an insulating liquid tank 110, an insulating liquid header 120, a transfer pipe 130, a supply pipe 140, and a transfer pump 150.

The insulating liquid tank 110 receives the insulating liquid 10 required for coating, and discharges a certain amount of the received insulating liquid 10 and delivers it to the slot die 200. The insulating liquid tank 110 may be further provided with a stirrer or the like for stirring the received insulating liquid 10, and the stirrer may include an impeller and a stirring motor for driving the impeller.

A lower part of the insulating liquid tank 110 includes an outlet (not shown) through which the insulating liquid 10 is discharged, the outlet being connected to a transfer pipe 130 which serves as a transportation passage for the insulating liquid 10.

The insulating liquid 10 discharged from the insulating liquid tank 110 can be moved to the slot die 200 by an external pressure.

In the insulating liquid supplying device 100 of the present invention, the transfer pump 150 provided in the transfer pipe 130 can provide the external pressure, that is, the insulating liquid 10 received in the insulating liquid tank 110 can be moved to the other side through the transfer pipe 130 by the pumping pressure exerted by the transfer pump 150.

Depending on the pumping pressure provided by the transfer pump 150, the flow rate (flow velocity) of the insulating liquid 10 to be transferred may vary. In addition, the degree of pressure loss may vary depending on the length and inner diameter size of the transfer pipe 130. That is, even if the same pumping pressure is applied, the length of the transfer pipe 130 and the inner diameter size of the transfer pipe 130 may affect the flow rate of the insulating liquid 10.

The slot die 200 for multi-row simultaneous coating used in the present invention forms an insulating layer by discharging the insulating liquid 10 in a plurality of rows, respectively. Therefore, the slot die 200 may be provided with a plurality of discharge outlets (or nozzles) (not shown), and each of the discharge outlet is connected to a corresponding discharge furnace 210.

The slot die 200 for multi-row simultaneous coating has the advantage that a plurality of insulating layers can be formed in a single operation, so that the process efficiency is high. However, if the flow rate of the insulating liquid 10 simultaneously discharged through each discharge outlet is different, a problem may arise that the loading amount of the insulating layer formed by the slot die 200 is not uniform. Therefore, it is desirable that the inner diameter and length of each discharge furnace 210 formed in the slot die 200 are all the same.

The insulating liquid header 120 receives the insulating liquid 10 transferred from the insulating liquid tank 110, and delivers the received insulating liquid 10 to the slot die 200.

The insulating liquid header 120 and the insulating liquid tank 110 are connected by a transfer pipe 130, and the insulating liquid 10 received in the insulating liquid tank 110 may be transferred to the insulating liquid header 120 through the transfer pipe 130.

In addition, the insulating liquid header 120 and the slot die 200 are connected by a supply pipe 140, and the insulating liquid 10 received in the insulating liquid header 120 can be transferred to the slot die 200 through the supply pipe 140. At this time, the supply pipe 140 connected to the slot die 200 is specifically connected to the discharge furnace 210 of the slot die 200. That is, the number of supply pipes 140 connected to the slot die 200 may be limited by the number of discharge furnaces 210 formed in the slot die 200.

The insulating liquid header 120 is preferably cylindrical so that the flow rate of the insulating liquid 10 conveyed through the receiving space therein can be kept stable and pressure losses can be minimized.

As shown in FIGS. 2 and 3, the insulating liquid header 120 of the present invention is formed extending along the width direction D of the slot die 200. Specifically, the insulating liquid header 120 is located at the upper part of the slot die 200 and is formed extending horizontally with the slot die 200.

Each supply pipe 140 connected to the insulating liquid header 120 may be disposed along a direction in which the insulating liquid header 120 is elongated. Specifically, the plurality of supply pipes 140 are spaced apart at predetermined distances and connected to the insulating liquid header 120 in turn. At this time, the length and inner diameter of each of the supply pipes 140 are preferably all the same so that the flow rate of the insulating liquid 10 conveyed through each of the supply pipes 140 becomes uniform. In other words, by unifying the dimensions of each of the supply pipes 140, the pressure loss value in each of the supply pipes 140 becomes the same. In addition, the supply pipes 140 are preferably the same in terms of all other factors that may affect the pressure loss, such as material, etc.

The insulating liquid header 120 may be provided at a position spaced apart in a predetermined distance from the slot die 200 as shown in FIG. 2, but need not be limited thereto and may be attached to the slot die 200.

FIG. 4 is a cross-sectional view of the insulating liquid header 120 of FIG. 3. Referring to FIGS. 3 and 4, the insulating liquid header 120 has an inlet port 121 formed at the lower part through which insulating liquid 10 flows in, and an outlet port 122 formed at the upper part through which insulating liquid 10 flows out.

A transfer pipe 130 connecting the insulating liquid tank 110 and the insulating liquid header 120 is connected with the inlet port 121 of the insulating liquid header 120, and a supply pipe 140 connecting the insulating liquid header 120 and the slot die 200 is connected with the outlet port 122 of the insulating liquid header 120. In this case, the transfer pipe 130 is connected to the lower part of the insulating liquid header 120 and the supply pipe 140 is connected to the upper part of the insulating liquid header 120.

The transfer pipe 130 is preferably connected to a height point $H2$ that is less than half of the height (inner diameter size) $H1$ of the insulating liquid header 120, and more preferably connected to a height point that is less than 30% of the height $H1$ of the insulating liquid header 120. In this way, by ensuring that the transfer pipe 130, i.e., the inlet port 121, is formed at a lower position of the insulating liquid header 120, there may be an effect of removing the bubbles (gas) generated in the insulating liquid header 120 by moving them to the upper part of the insulating liquid header 120.

If the gases generated in the insulating liquid header 120 are not discharged smoothly, the remaining gases may interfere with the flow rate (flow velocity) of the insulating liquid 10 or cause an uneven loading amount when the insulating liquid 10 is discharged. Therefore, by connecting the transfer pipe 130 to the lower part of the insulating liquid header 120 and connecting the supply pipe 140 to the upper part of the insulating liquid header 120, small gases are removed from the insulating liquid header 120 from time to time along with the transfer of the insulating liquid 10. At this time, in order to further increase the effectiveness of the gas removal, the supply pipe 140 is preferably connected to the uppermost part of the insulating liquid header 120.

In this regard, the insulating liquid supplying device 100 of the present invention may be further provided with a gas discharge valve or the like at the upper part of the insulating liquid header 120. That is, gases such as air generated inside the insulating liquid header 120 may be discharged to the outside through the gas discharge valve.

The insulating liquid 10, which is introduced through the transfer pipe 130, passes through the internal receiving space of the insulating liquid header 120 and simultaneously flows out through the plurality of supply pipes 140.

The present invention aims to adjust the flow rate (flow velocity) of the insulating liquid 10 flowing out through each of the supply pipes 140 to be constant, so that the insulating liquid 10 is uniformly discharged through each of the outlet port of the slot die 200. Accordingly, the height at which each outlet port 122 is formed in the insulating liquid header 120 is preferably all the same so that the flow rate (flow velocity) of the insulating liquid 10 conveyed through each supply pipe 140 is uniform.

In addition, the insulating liquid supplying device 100 of the present invention is adjusted so that the flow rate (flow velocity) of the insulating liquid 10 to be moved is all the same in the plurality of supply pipes 140 connected to the insulating liquid header 120 by extremely increasing the pressure loss in the plurality of supply pipes 140 compared to the pressure loss in the insulating liquid header 120. For example, even if the supply pipe 140 is connected to the insulating liquid header 120 at the same height with the same dimensions, a difference in the flow rate of the insulating liquid 10 in each supply piping 140 may occur depending on the distance of the outlet port 122 from the transfer pipe 130, that is, the inlet port 121 of the insulating liquid header 120.

The insulating liquid supplying device 100 according to the first embodiment of the present invention has modified the shape of the supply pipes 140 to increase the pressure loss in the supply pipes 140. Specifically, as shown in FIGS. 2 and 4, the supply pipe 140 has a U-shaped structure that is protruded from the upper part of the insulating liquid header 120 and turns downward to be connected with the slot die 200. More preferably, the supply pipe 140 is protruded from the upper part of the insulating liquid header 120 and connected with the slot die 200.

Depending on where the supply pipe 140 is connected to the upper part of the insulating liquid header 120, a difference in flow rate (flow velocity) in the supply pipe 140 may occur. For example, if the supply pipe 140 is connected near 60% of the height of the insulating liquid header 120, the insulating liquid 10 conveyed to the supply pipe 140 near the inlet port 121 of the insulating liquid header 120 may be subjected to a relatively stronger pumping pressure from the transfer pump 150. Therefore, in order to minimize the relative influence of the transfer pump 150 as described above, the supply pipe 140 is preferably connected to the uppermost part of the insulating liquid header 120.

In the insulating liquid supplying device 100 of the present invention, the pressure loss of the insulating liquid header 120 and the supply pipe 140 preferably satisfies the condition of the following Equation 1.

$$[\text{Equation 1}]$$

$$(\triangle Ph/n) < \triangle Ps * 5\%$$

(In Equation 1, n is the number of transfer pipes connected to the insulating liquid header, $\triangle Ph$ is the pressure loss inside the insulating liquid header, and $\triangle Ps$ is the pressure loss of a single supply pipe.)

The insulating liquid header 120 and the supply pipe 140 included in the insulating liquid supplying device 100 according to the first embodiment of the present invention are preferably adjustable in volume, shape, position, inner diameter, and length within the range that satisfies the above Equation 1.

(Second embodiment)

The insulating liquid supplying device 100 according to the second embodiment, not according to the invention, has the insulating liquid header 120 arranged to be located at the lower part of the slot die 200.

FIG. 5 illustrates the insulating liquid supplying device 100 according to the second embodiment of the present invention.

As shown in FIG. 5, the insulating liquid supplying device 100 according to the second embodiment has an insulating liquid header 120 positioned at the lower part of the slot die 200, and a supply pipe 140 extends from the upper part of the insulating liquid header 120 and is connected to the slot die 200.

Since the supply pipe 140 is in the form of being extended vertically, the resistance encountered by the insulating liquid 10 being transported may be less than in the first embodiment. Therefore, an inner diameter of the supply pipe 140 of the insulating liquid supplying device 100 according to the second embodiment may be smaller than an inner diameter of the supply pipe 140 of the insulating liquid supplying device 100 according to the first embodiment, and a length of the supply pipe 140 of the insulating liquid supplying device 100 according to the second embodiment may be longer than a length of the supply pipe 140 of the insulating liquid supplying device 100 according to the first embodiment. Alternatively, the volume of the insulating liquid header 120, the inner diameter and length of the transfer pipe 130, and the like may be manipulated so that the pressure loss in the insulating liquid header 120 is less than the pressure loss in the insulating liquid header 120 of the insulating liquid supplying device 100 according to the first embodiment above.

(Third embodiment)

The insulating liquid supplying device 100 according to the third embodiment, not according to the invention, has the insulating liquid header 120 located at the rear of the slot die 200 and disposed at the lower part of the slot die 200.

FIG. 6 shows the insulating liquid supplying device 100 according to the third embodiment, not according to the present invention.

As shown in FIG. 6, the supply pipe 140 of the insulating liquid supplying device 100 according to the third embodiment is protruded vertically from the upper part of the insulating liquid header 120, and then bends horizontally toward the rear of the slot die 200.

The supply pipe 140 with such a structure may have a smaller pressure loss than the first embodiment above, and a larger pressure loss than the second embodiment above.

(Fourth Embodiment)

In the insulating liquid supplying device 100 of the present invention, the insulating liquid 10 can be supplied to the insulating liquid header 120 through a plurality of transfer pipes 130, each of which is equipped with a transfer pump 150. In other words, by increasing the number of paths through which the insulating liquid 10 is transferred to a plurality and equipping each of the transfer pipes 130 with a transfer pump 150, it is possible to transfer the insulating liquid 10 in a short time.

FIG. 7 is an insulating liquid supplying device 100 according to the fourth embodiment of the present invention.

As shown in FIG. 7, in the insulating liquid supplying device 100 according to the fourth embodiment of the present invention, the insulating liquid 10 is transferred from the insulating liquid tank 110 to the slot die 200 by a transfer pump 150 connected to a plurality of pipes, respectively. Specifically, the transfer pipe 130 includes a main transfer pipe 131 connected to the insulating liquid tank 110 and an auxiliary transfer pipe 132 that branches

off from the main transfer pipe 131 and connected to the insulating liquid header 120. More specifically, at least two or more auxiliary transfer pipes 132 may branch off from the main transfer pipe 131 in parallel, and each of the branched auxiliary transfer pipes 132 is connected to the insulating liquid header 120. In this case, a transfer pump 150 may be provided in each of the auxiliary transfer pipes 132.

Referring to FIG. 7, three auxiliary transfer pipes 132 are connected to one main transfer pipe 131, and three transfer paths are formed by the branched auxiliary transfer pipes 132.

The insulating liquid 10 may be transferred to the insulating liquid header 120 via the three transfer paths, wherein the pressure loss of each auxiliary transfer pipe 132 may vary due to the difference in distance of the transfer paths. In other words, the plurality of auxiliary transfer pipes 132 may be designed to have different lengths depending on the situation. In this case, the flow rate (flow velocity) of the insulating liquid 10 transferred through each of the auxiliary transfer pipes 132 will vary.

However, the insulating liquid supplying device 100 of the present invention firstly buffers the above differences by temporarily accommodating the insulating liquid 10 transferred through each auxiliary transfer pipe 132 in a single space called the insulating liquid header 120. Secondly, by extremely increasing the pressure loss of the supply pipes 140, the insulating liquid 10 in each of the plurality of supply pipes 140 can all be transferred at the same flow rate.

The insulating liquid supplying device 100 of the present invention can overcome flow unevenness caused by differences in the length of the transfer pipes 130 and the like by adding the insulating liquid header 120 configuration. Furthermore, by limiting the position of the supply pipe 140, it is possible to overcome the flow unevenness phenomenon that may be newly generated by the insulating liquid header 120 configuration.

In addition, the insulating liquid supplying device 100 of the present invention has the effect of offsetting the flow difference caused by the transfer pipe 130 and the insulating liquid header 120 by intentionally increasing the pressure loss of the supply pipe 140, and enabling the flow rate of the insulating liquid 10 transferred from the insulating liquid header 120 to each supply pipe 140 to become uniform.

[Reference Numerals]

    10': (conventional) INSULATING LIQUID
    100': (conventional) INSULATING LIQUID TANK
    200': (conventional) TRANSFER PIPE
    300': (conventional) TRANSFER PUMP
    400': (conventional) SLOT DIE
    10: INSULATING LIQUID
    100: INSULATING LIQUID

SUPPLYING DEVICE
110: INSULATING LIQUID TANK
120: INSULATING LIQUID HEADER
121: INLET PORT
122: OUTLET PORT
130: TRANSFER PIPE
131: MAIN TRANSFER PIPE
132: AUXILIARY TRANSFER PIPE
140: SUPPLY PIPE
150: TRANSFER PUMP
200: SLOT DIE
210: DISCHARGE FURNACE
D: WIDTH DIRECTION

**Claims**

1. An insulating liquid supplying device (100) for supplying insulating liquid (10) to a slot die (200) for a multi-row simultaneous coating comprising:

    an insulating liquid tank (110) configured to receive insulating liquid (10);
    a cylindrical insulating liquid header (120) configured to receive insulating liquid (10) transferred from the insulating liquid tank (110), and to convey the received insulating liquid (10) to a slot die (200);
    a transfer pipe (130) connected between the insulating liquid tank (110) and the insulating liquid header (120) so that insulating liquid (10) can be transferred;
    a plurality of supply pipes (140) connected between the insulating liquid header (120) and the slot die (200); and
    a transfer pump (150) provided in the transfer pipe (130) configured to provide pressure to transfer insulating liquid (10) from the insulating liquid tank (110) to the slot die (200),
    wherein the supply pipes (140) are connected to an upper part of the insulating liquid header (120), **characterized in that**,
    the transfer pipe (130) is connected to a lower part of the insulating liquid header (120), and
    wherein the plurality of supply pipes (140) have a U-shaped structure that is protruded from the upper part of the insulating liquid header (120) and turns downward connectable with the slot die (200).

2. The insulating liquid supplying device (100) of claim 1, wherein
the insulating liquid header (120) is formed to be extended so that it can be horizontal to the slot die (200), if provided.

3. The insulating liquid supplying device (100) of claim 1, wherein

the plurality of supply pipes (140) are protruded from the upper part of the insulating liquid header (120) and configured to be connected to the slot die (200).

4. The insulating liquid supplying device (100) of claim 1, wherein
a pressure loss of the insulating liquid header (120) is smaller than a pressure loss of the supply pipe (140).

5. The insulating liquid supplying device (100) of claim 1, wherein

    pressure losses of the insulating liquid header (120) and the supply pipe (140) meet the conditions of Equation 1 below.

    [Equation 1]

    $$(\triangle Ph/n) < \triangle Ps * 5\%$$

    wherein n is the number of transfer pipes (130) connected to the insulating liquid header (120), $\triangle Ph$ is the pressure loss inside the insulating liquid header (120), and $\triangle Ps$ is the pressure loss of a single supply pipe (140).

6. The insulating liquid supplying device (100) of claim 1, wherein
the transfer pipe (130) comprises: a main transfer pipe (131) connected to the insulating liquid tank (110); and an auxiliary transfer pipe (132) branching from the main transfer pipe (131) and connected to the insulating liquid header (120).

7. The insulating liquid supplying device (100) of claim 6, wherein
at least two or more auxiliary transfer pipes (132) branch off in parallel from the main transfer pipe (131), and the branched auxiliary transfer pipes (132) are connected to the insulating liquid header (120), respectively.

8. The insulating liquid supplying device (100) of claim 7, wherein
the transfer pumps (150) are provided in each of the auxiliary transfer pipes (132).

9. The insulating liquid supplying device (100) of claim 1 and a slot die (200), said slot die comprising a plurality of outlets for discharging insulating liquid (10) at one end, connected to the insulating liquid header (120) receiving the insulating liquid, and receiving insulating liquid from each supply pipe (140) by being connected to the insulating liquid header by the plurality of supply pipes (140).

10. The insulation liquid supplying device and the slot die of claim 9, wherein

the insulating liquid header (120) extends along a width direction of the slot die (200).

11. The insulation liquid supplying device and the slot die of claim 9, wherein
the plurality of supply pipes (140) are disposed along a direction in which the insulating liquid header (120) is extended to connect the insulating liquid header (120) and the slot die (200).

12. The insulation liquid supplying device and the slot die of claim 9, wherein
a length and inside diameter of each of the supply pipes (140) are all the same.

13. The insulation liquid supplying device and the slot die of claim 9, wherein
pressure losses in each of the supply pipes (140) are the same.

**Patentansprüche**

1. Isolierflüssigkeit-Zuführvorrichtung (100) zum Zuführen einer Isolierflüssigkeit (10) zu einer Schlitzdüse (200) für ein Mehrreihen-Simultan-Beschichten, umfassend:

einen Isolierflüssigkeitstank (110), welcher dazu eingerichtet ist, eine Isolierflüssigkeit (10) empfangen;
eine zylindrische Isolierflüssigkeit-Kopfeinheit (120), welche dazu eingerichtet ist, eine von dem Isolierflüssigkeitstank (110) übertragene Isolierflüssigkeit (10) zu empfangen, und die empfangene Isolierflüssigkeit (10) zu einer Schlitzdüse (200) zu überführen;
ein Übertragungsrohr (130), welches zwischen dem Isolierflüssigkeitstank (110) und der Isolierflüssigkeit-Kopfeinheit (120) verbunden ist, sodass die Isolierflüssigkeit (10) übertragen werden kann;
eine Mehrzahl von Zuführrohren (140), welche zwischen der Isolierflüssigkeit-Kopfeinheit (120) und der Schlitzdüse (200) verbunden sind; und
eine Übertragungspumpe (150), welche in dem Übertragungsrohr (130) bereitgestellt ist, welche dazu eingerichtet ist, einen Druck bereitzustellen, um die Isolierflüssigkeit (10) von dem Isolierflüssigkeitstank (110) zu der Schlitzdüse (200) zu übertragen,
wobei die Zuführrohre (140) mit einem oberen Teil der Isolierflüssigkeit-Kopfeinheit (120) verbunden sind, **dadurch gekennzeichnet, dass**
das Übertragungsrohr (130) mit einem unteren Teil der Isolierflüssigkeit-Kopfeinheit (120) verbunden ist, und

wobei die Mehrzahl von Zuführrohren (140) eine U-geformte Struktur aufweisen, welche von dem oberen Teil der Isolierflüssigkeit-Kopfeinheit (120) vorsteht und sich verbindbar mit der Schlitzdüse (200) nach unten dreht.

2. Isolierflüssigkeit-Zuführvorrichtung (100) nach Anspruch 1, wobei
die Isolierflüssigkeit-Kopfeinheit (120) gebildet ist, um sich zu erstrecken, sodass sie horizontal zu der Schlitzdüse (200) sein kann, wenn bereitgestellt.

3. Isolierflüssigkeit-Zuführvorrichtung (100) nach Anspruch 1, wobei
die Mehrzahl von Zuführrohren (140) von dem oberen Teil der Isolierflüssigkeit-Kopfeinheit (120) vorstehen und dazu eingerichtet sind, mit der Schlitzdüse (200) verbunden zu sein.

4. Isolierflüssigkeit-Zuführvorrichtung (100) nach Anspruch 1, wobei
ein Druckverlust der Isolierflüssigkeit-Kopfeinheit (120) kleiner ist als ein Druckverlust des Zuführrohrs (140).

5. Isolierflüssigkeit-Zuführvorrichtung (100) nach Anspruch 1, wobei

Druckverluste der Isolierflüssigkeit-Kopfeinheit (120) und des Zuführrohrs (140) die nachstehenden Gleichungs-Bedingungen erfüllen.

[Gleichung 1]

$$(\Delta Ph/n) < \Delta Ps*5 \%$$

wobei n die Anzahl von Übertragungsrohren (130) ist, welche mit der Isolierflüssigkeit-Kopfeinheit (120) verbunden sind, $\Delta Ph$ der Druckverlust innerhalb der Isolierflüssigkeit-Kopfeinheit (120) ist und $\Delta Ps$ der Druckverlust eines einzelnen Zuführrohrs (140) ist.

6. Isolierflüssigkeit-Zuführvorrichtung (100) nach Anspruch 1, wobei
das Übertragungsrohr (130) umfasst: ein Hauptübertragungsrohr (131), welches mit dem Isolierflüssigkeitstank (110) verbunden ist; und ein Hilfsübertragungsrohr (132), welches sich von dem Hauptübertragungsrohr (131) verzweigt und mit der Isolierflüssigkeit-Kopfeinheit (120) verbunden ist.

7. Isolierflüssigkeit-Zuführvorrichtung (100) nach Anspruch 6, wobei
wenigstens zwei oder mehr Hilfsübertragungsrohre (132) sich parallel von dem Hauptübertragungsrohr (131) verzweigen und wobei die verzweigten Hilfsübertragungsrohre (132) jeweils mit der Isolierflüssigkeit-Kopfeinheit (120) verbunden sind.

8. Isolierflüssigkeit-Zuführvorrichtung (100) nach Anspruch 7, wobei die Übertragungspumpen (150) in jedem der Hilfsübertragungsrohre (132) bereitgestellt sind.

9. Isolierflüssigkeit-Zuführvorrichtung (100) nach Anspruch 1 und eine Schlitzdüse (200), die Schlitzdüse umfassend eine Mehrzahl von Auslässen zum Abgeben einer Isolierflüssigkeit (10) an einem Ende, welches mit der Isolierflüssigkeit-Kopfeinheit (120) verbunden ist, welche die Isolierflüssigkeit empfängt, und zum Empfangen einer Isolierflüssigkeit von jedem der Zuführrohre (140), indem sie mit der Isolierflüssigkeit-Kopfeinheit durch die Mehrzahl von Zuführrohren (140) verbunden sind.

10. Isolierflüssigkeit-Zuführvorrichtung und Schlitzdüse nach Anspruch 9, wobei sich die Isolierflüssigkeit-Kopfeinheit (120) entlang einer Breitenrichtung der Schlitzdüse (200) erstreckt.

11. Isolierflüssigkeit-Zuführvorrichtung und Schlitzdüse nach Anspruch 9, wobei die Mehrzahl von Zuführrohren (140) entlang einer Richtung angeordnet sind, in welcher sich die Isolierflüssigkeit-Kopfeinheit (120) erstreckt, um die Isolierflüssigkeit-Kopfeinheit (120) mit der Schlitzdüse (200) zu verbinden.

12. Isolierflüssigkeit-Zuführvorrichtung und Schlitzdüse nach Anspruch 9, wobei eine Länge und ein Innendurchmesser von jedem der Zuführrohre (140) alle gleich sind.

13. Isolierflüssigkeit-Zuführvorrichtung und Schlitzdüse nach Anspruch 9, wobei Druckverluste in dem jeder Zuführrohre (140) gleich sind.

**Revendications**

1. Dispositif d'alimentation en liquide isolant (100) pour l'alimentation de liquide isolant (10) à une filière à fente (200) pour un revêtement simultané en plusieurs rangées comprenant :

   un réservoir de liquide isolant (110) configuré pour recevoir un liquide isolant (10) ;
   un collecteur de liquide isolant cylindrique (120) configuré pour recevoir du liquide isolant (10) transféré à partir du réservoir de liquide isolant (110), et pour transporter le liquide isolant (10) reçu vers une filière à fente (200) ;
   un tuyau de transfert (130) raccordé entre le réservoir de liquide isolant (110) et le collecteur de liquide isolant (120) de sorte que le liquide isolant (10) puisse être transféré ;
une pluralité de tuyaux d'alimentation (140) raccordés entre le collecteur de liquide isolant (120) et la filière à fente (200) ; et
une pompe de transfert (150) disposée dans le tuyau de transfert (130) configurée pour fournir une pression pour transférer le liquide isolant (10) depuis le réservoir de liquide isolant (110) vers la filière à fente (200),
dans lequel les tuyaux d'alimentation (140) sont raccordés à une partie supérieure du collecteur de liquide isolant (120), **caractérisé en ce que,** le tuyau de transfert (130) est raccordé à une partie inférieure du collecteur de liquide isolant (120), et
dans lequel la pluralité de tuyaux d'alimentation (140) présentent une structure en forme de U qui fait saillie à partir de la partie supérieure du collecteur de liquide isolant (120) et tourne vers le bas pour pouvoir être raccordée à la filière à fente (200).

2. Dispositif d'alimentation en liquide isolant (100) selon la revendication 1, dans lequel le collecteur de liquide isolant (120) est formé pour être étendu de sorte qu'il puisse être horizontal par rapport à la filière à fente (200), le cas échéant.

3. Dispositif d'alimentation en liquide isolant (100) selon la revendication 1, dans lequel la pluralité de tuyaux d'alimentation (140) font saillie à partir de la partie supérieure du collecteur de liquide isolant (120) et sont configurés pour être raccordés à la filière à fente (200).

4. Dispositif d'alimentation en liquide isolant (100) selon la revendication 1, dans lequel une perte de pression du collecteur de liquide isolant (120) est inférieure à une perte de pression du tuyau d'alimentation (140).

5. Dispositif d'alimentation en liquide isolant (100) selon la revendication 1, dans lequel des pertes de pression du collecteur de liquide isolant (120) et du tuyau d'alimentation (140) satisfont aux conditions de l'équation 1 ci-dessous.

[Équation 1]

$$(\Delta Ph/n) < \Delta Ps *5\,\%$$

dans lequel
n est le nombre de tuyaux de transfert (130) raccordés au collecteur de liquide isolant (120), ΔPh est la perte de pression à l'intérieur du collecteur de liquide

isolant (120) et $\Delta$Ps est la perte de pression d'un seul tuyau d'alimentation (140).

6. Dispositif d'alimentation en liquide isolant (100) selon la revendication 1, dans lequel
le tuyau de transfert (130) comprend : un tuyau de transfert principal (131) raccordé au réservoir de liquide isolant (110) ; et un tuyau de transfert auxiliaire (132) se ramifiant à partir du tuyau de transfert principal (131) et raccordé au collecteur de liquide isolant (120).

7. Dispositif d'alimentation en liquide isolant (100) selon la revendication 6, dans lequel
au moins deux tuyaux de transfert auxiliaires (132) ou plus se ramifient en parallèle à partir du tuyau de transfert principal (131) et les tuyaux de transfert auxiliaires (132) ramifiés sont respectivement raccordés au collecteur de liquide isolant (120).

8. Dispositif d'alimentation en liquide isolant (100) selon la revendication 7, dans lequel
les pompes de transfert (150) sont disposées dans chacun des tuyaux de transfert auxiliaires (132).

9. Dispositif d'alimentation en liquide isolant (100) selon la revendication 1 et une filière à fente (200), ladite filière à fente comprenant une pluralité de sorties destinées à évacuer un liquide isolant (10) à une extrémité, raccordées au collecteur de liquide isolant (120) recevant le liquide isolant, et recevant du liquide isolant provenant de chaque tuyau d'alimentation (140) en étant raccordées au collecteur de liquide isolant par la pluralité de tuyaux d'alimentation (140).

10. Dispositif d'alimentation en liquide isolant et filière à fente selon la revendication 9, dans lesquels
le collecteur de liquide isolant (120) s'étend le long d'une direction de largeur de la filière à fente (200).

11. Dispositif d'alimentation en liquide isolant et filière à fente selon la revendication 9, dans lesquels
la pluralité de tuyaux d'alimentation (140) sont disposés le long d'une direction dans laquelle le collecteur de liquide isolant (120) est étendu pour raccorder le collecteur de liquide isolant (120) et la filière à fente (200).

12. Dispositif d'alimentation en liquide isolant et filière à fente selon la revendication 9, dans lesquels
une longueur et un diamètre intérieur de chacun des tuyaux d'alimentation (140) sont tous identiques.

13. Dispositif d'alimentation en liquide isolant et filière à fente selon la revendication 9, dans lesquels
des pertes de pression dans chacun des tuyaux d'alimentation (140) sont identiques.

[FIG. 1]

[FIG. 2]

100

110

10

140

120

200

130

150

[FIG. 3]

[FIG. 4]

[FIG. 5]

[FIG. 6]

[FIG. 7]

**EP 4 325 625 B1**

**Patent documents cited in the description**

- KR 1020220033402
- KR 102035822
- CN 112892999 A
- JP 2017050213 A
- JP 2022041501 A